# EUROPÄISCHE PATENTANMELDUNG

(11) **EP 4 523 960 A1**
(43) Veröffentlichungstag der Anmeldung: **19.03.2025**
(21) Anmeldenummer: 24197926.9
(22) Anmeldetag: 02.09.2024
(51) Int. Cl.: B60N 2/02, B60N 2/39, B60N 2/58, B60N 2/90

(54) **FAHRZEUGSITZ MIT AUTOMATISCHEM NEIGUNGSAUSGLEICH DES SITZTEILES**

(30) Priorität: 13.09.2023 DE 102023124757
(71) Anmelder: GRAMMER AG, 92289 Ursensollen (DE)
(72) Erfinder: Demleitner, Berthold, 92272 Freudenberg (DE); Haller, Thomas, 92289 Ursensollen (DE)
(74) Vertreter: Hannke, Christian

(57) **Zusammenfassung**

Fahrzeugsitz (1) für den automatischen Neigungsausgleich mit einem Sitzteil (2), welches ein Sitzpolsterteil (2a) aufweist wobei eine Fluidkammereinheit (16a, 16b) mit mindestens zwei flexibel ausgebildeten Fluidkammern (16a, 16b) in dem Sitzpolsterteil (2a) in seinem oberseitigen Sitzbereich angeordnet ist, wobei, bezogen auf eine sich in Sitzrichtung erstreckende Mittelachse (15), eine erste Hälfte der Fluidkammern (16a) linksseitig und eine zweite Hälfte der Fluidkammern (16b) rechtsseitig der Mittelachse (15) angeordnet sind, wobei die Fluidkammern (16a, 16b) der ersten und der zweiten Hälften (20a, 20b) abhängig von einer festgestellten seitlichen Neigungsstellung des Sitzteils (2) mittels einer Steuereinrichtung (13) derart befüllbar oder entleerbar sind, dass ein Sitzbenutzer automatisch eine Ausgleichsstellung zu der Neigungsstellung im Gesäßbereich erfährt.

## Beschreibung

Die Erfindung betrifft einen Fahrzeugsitz für den automatischen Neigungsausgleich mit einem Sitztteil, welches ein Sitzpolsterteil aufweist, gemäß dem Oberbegriff des Patentanspruches 1.

Häufig ergibt sich bei Nutzfahrzeugen, wie bei Traktoren, das Problem, dass diese zeitweise in einer seitlichen Schrägstellung bzw. Neigungsstellung betrieben werden, um beispielsweise einen Pflug auf dem Acker hinter sich herzuziehen. Bei einem Umpflügen des Ackers ergibt sich nämlich das Problem, dass sich die eine Hälfte der Räder des Traktors im Bereich des bereits gepflügten Ackers befindet, während sich die andere Hälfte der Räder auf dem noch ungepflügten Ackerboden fortbewegt. Hierdurch ergibt sich eine seitliche Neigungsstellung bzw. Schrägstellung des Traktors und damit auch des Fahrzeugsitzes.

Wird eine derartige Schrägstellung bzw. Neigungsstellung des Fahrzeugsitzes über längere Zeit dem Rücken bzw. der Wirbelsäule eines Fahrzeugbenutzers zugemutet, so ergibt sich hieraus die Gefahr von Wirbelsäulenschäden in dem Arbeitsumfeld von Traktoren und aber auch von Baumaschinen. Bei Baumaschinen ergibt sich ebenso sehr häufig das Problem, dass diese bei Straßenbauarbeiten in Schrägstellung betrieben werden müssen. Dies hat ebenso zur Folge, dass der Sitzbenutzer in schräger Position auf dem Fahrzeugsitz sitzt und versucht, diese Schrägposition mithilfe seiner Wirbelsäule auszugleichen.

Somit ergibt sich eine Fehlstellung der Wirbelsäule von oben nach unten zu der Beckenstellung. Dies führt unter Umständen sogar dazu, dass es zu Wirbelsäulenverkrümmungen, sogenannten Skoliosen kommt. Denn der Mensch neigt dazu, dass er seinen Kopf und damit auch die Augen immer horizontal ausrichten möchte, auch wenn das Becken am Ende der Wirbelsäule schräggestellt ist.

Eine Skoliose wird als leicht eingestuft, wenn der Krümmungswinkel der Wirbelsäule über 10°, aber nicht höher als maximal 40° beträgt. Sehr häufig liegen derartige Werte bei rund 20°. Zwar ist eine derartige Skoliose durch konsequente Rückengymnastik behandelbar, jedoch müssen derartige Übungen konsequent und regelmäßig durchgeführt werden, welches häufig aufgrund des täglichen Arbeitsumfeldes auf dem Acker oder auf der Baustelle nicht möglich ist.

Somit ist es Aufgabe der Erfindung, einen Fahrzeugsitz für den automatischen Neigungsausgleich mit einem Sitzteil zur Verfügung zu stellen, der auf einfache Weise für den Sitzbenutzer selbsttätig eine Ausgleichsstellung bei Schrägstellung oder Neigungsstellung des Fahrzeugsitzes zur Verfügung stellen kann.

Diese Aufgabe wird gemäß den Merkmalen des Patentanspruches 1 gelöst.

Kerngedanke der Erfindung ist es, dass bei einem Fahrzeugsitz für den automatischen Neigungsausgleich mit einem Sitztteil und einer Rückenlehne sogenannte Fluidkammern im Bereich des Sitzteiles verwendet werden, wobei Sitztteil und Rückenlehne unabhängig voneinander zu betrachten sind. Dies bedeutet, dass lediglich das Sitztteil und nicht der Rückenlehnenteil für eine Ausgleichsbewegung verändert wird.

Hierfür weist der Fahrzeugsitz mit dem Sitztteil, welches ein Sitzpolsterteil aufweist, eine Fluidkammereinheit mit mindestens zwei flexibel ausgebildeten Fluidkammern in dem Sitzpolsterteil auf, wobei diese Fluidkammereinheit in dem oberseitigen Sitzbereich des Sitzpolsterteiles ausschließlich angeordnet ist. Bezogen auf eine sich in Sitzrichtung erstreckende Mittelachse ist die Vielzahl der Fluidkammern in zwei Hälften aufgeteilt. Eine erste Hälfte, die sowohl volumenmäßig als auch anzahlmäßig der Hälfte der gesamten Fluidkammern bzw. deren Fluidkammervolumen entspricht, ist linksseitig von der Mittelachse angeordnet. In einer zweiten Hälfte bezüglich der Anzahl und der Volumina der gesamten Fluidkammern sind die die restlichen Fluidkammern rechtsseitig der Mittelachse angeordnet.

Die Fluidkammern der ersten und der zweiten Hälfte sind abhängig von einer festgestellten seitlichen Neigungsstellung des Sitzteiles mittels einer Steuereinrichtung derart befüllbar und/oder entleerbar, dass ein Sitzbenutzer im Gesäßbereich automatisch hierdurch in seitlicher Richtung eine Ausgleichsstellung zu der Neigungsstellung des Fahrzeuges erfährt.

Hierzu ist bevorzugt eine Neigungssensoreinheit im Einsatz, die mit dem Fahrzeugsitz verbunden ist, wobei diese den Grad der momentanen seitlichen Neigung des Fahrzeugsitzes und/oder des Fahrzeuges misst und ein Neigungsmesssignal an die Steuereinrichtung sendet. Mit dem empfangenen Neigungsmesssignal findet eine Verarbeitung der Daten innerhalb der Steuereinrichtung statt, woraufhin eine Ventileinrichtung Signale von der Steuereinrichtung empfängt, um gezielt entweder die linksseitige Fluidkammer oder die rechtsseitige Fluidkammer mit einem Fluid aufzublasen.

Hierdurch kann erreicht werden, dass genau auf der Seite, zu der sich das Fahrzeug und der Fahrzeugsitz hinneigt, gezielt die auf dieser Seite angeordnete Fluidkammer aufgeblasen bzw. aufgepumpt wird, um so eine Ausgleichsstellung entgegengesetzt zu der Neigungsstellung des gesamten Fahrzeugsitzes und des Fahrzeuges zu erhalten. Hierdurch wird das Becken und damit auch der Gesäßbereich des Sitzbenutzers wieder horizontal ausgerichtet, wobei die Rückenlehne nicht mitbewegt wird. Denn Ziel ist es, dass in erster Linie eine gerade Wirbelsäulenausrichtung besteht, selbst dann, wenn das Fahrzeug sich extrem zu einer Seite neigt. Dies soll verhindern, dass Skoliose bzw. Wirbelsäulenstrukturschäden entstehen.

Selbstverständlich kann bei der Erschaffung einer derartigen Ausgleichsstellung nicht nur eine Fluidkammer auf jeder Seite der Mittelachse vorhanden sein, sondern eine Mehrzahl an Fluidkammern, die dementsprechend unterschiedlich stark aufgepumpt bzw. aufgeblasen oder entleert werden können. Hierdurch kann erreicht werden, dass abhängig von der Körperstruktur und den Körperformen des Sitzbenutzers in seinem Gesäßbereich ein erhöhter Sitzkomfort bei Einstellung der Ausgleichsstellung erhalten wird, indem zum Beispiel im Bereich der Beckenknochen eine stärkere Polsterung durch ein erhöhtes Aufblasen einer Fluidkammer in diesem Bereich geschaffen wird. Die Fluidkammer kann auch vorteilhaft unterschiedliche Flächenausdehnungen haben, sodass gezielt bestimmte Körperbereiche im Gesäßbereich des Sitzbenutzers unterstützt oder auch nicht unterstützt werden. Eine Anpassung an die Körperform im Gesäßbereich ist somit sichergestellt.

Selbstverständlich ist es auch möglich, dass nicht nur auf einer Seite bzw. einer Hälfte des Sitzteiles die dort angeordneten Fluidkammern aufgepumpt werden, sondern zeitgleich in der anderen Hälfte die Fluidkammern entsprechend entleert werden, um eine entsprechend starke Ausgleichsstellung in seitlicher Richtung zu erhalten. Alternativ ist auch eine Steuerung der Volumina innerhalb der Fluidkammern mithilfe der Steuereinrichtung und der Ventileinrichtungen derart denkbar, dass jede Menge an Volumina zwischen einem Maximum und einem Minimum innerhalb der Fluidkammern einstellbar ist. Somit können unterschiedlich starke Ausgleichsstellungen in seitlicher Richtung erhalten werden, die entsprechend der Stärke der Neigung des Fahrzeuges und des Fahrzeugsitzes angepasst werden.

Im einfachsten Fall sind die linksseitigen und die rechtsseitigen Fluidkammern bzw. die linksseitige und die rechtsseitige Fluidkammer direkt miteinander verbunden, so dass allein durch Verlagerung des Körpergewichtes ein automatisches Entweichen des Fluids aus der einen Kammer in der einen Hälfte hinüber zu der anderen Kammer in der anderen Hälfte stattfindet. Dies kann sogar ohne Zuhilfenahme einer Steuereinrichtung und einer Ventileinrichtung erfolgen. Selbst ein Neigungssensor ist er hierfür nicht notwendig.

Allerdings ist der gewünschte Effekt einer Ausgleichsstellung in diesem Fall nur sehr begrenzt. Diese Art der Einstellung eine Ausgleichsstellung, nämlich durch eine Körpergewichtsverlagerung, kann jedoch auch kombiniert werden mit einer gezielten zusätzlichen Fluidzufuhr oder Fluidabfuhr zu/von der linksseitigen Fluidkammer und/oder der rechtsseitigen Fluidkammer bzw. zu/von mehreren Fluidkammern auf der linken und/oder rechten Seite. Dies soll mithilfe der bereits genannten Steuereinrichtung, den Neigungsmesssignalen der Neigungssensoreinrichtung und der Ventileinrichtung geschehen.

Die Fluidkammern können als Luftkammern ausgebildet sein, wobei links- und rechtsseitig der Mittelachse jeweils eine Mehrzahl an Luftkammern angeordnet sein kann. Das Medium Luft ist vorteilhaft verwendbar bei Fahrzeugsitzen, da sehr viele Fahrzeugsitze ohnehin mit einer Luftfederung ausgestattet sind und somit eine Luftversorgung an dem Fahrzeugsitz bereits vorhanden ist. Eine derartige Luftversorgung beispielsweise mittels einer Pumpeneinrichtung kann somit nicht nur zur Federung des Fahrzeugsitzes, sondern auch zu der erfindungsgemäßen automatischen Einstellung eines Neigungsausgleiches des Sitzteiles verwendet werden.

Gemäß einer bevorzugten Ausführungsform erstrecken sich die Fluidkammern nicht über die gesamte Sitzfläche des Sitzteiles, sondern in Sitzrichtung begrenzt auf die Länge eines Beckens eines Gesäßbereich des Sitzbenutzers. Dies würde zum Beispiel bedeuten, dass die vorderseitige Auflagefläche für die Beine des Sitzbenutzers nicht durch die Fluidkammern abgedeckt sind. Dies ist auch nicht notwendig, da in 1. Linie die Beckenerstellung unterstützt werden soll.

Zudem kann hierdurch Volumina des Fluids bzw. der Luft eingespart werden. Dies hat vorteilhaft zur Folge, dass auch eine schnelle Änderung des Grads der Neigungsausgleichsstellung in automatischer Form stattfinden kann, wenn beispielsweise der Traktor in seiner Neigungsstellung während eines Pflugvorganges ständig seine seitliche Ausrichtung verändert, da er über die unebene Ackerbodenfläche fährt. Je größer in diesem Fall das Volumen der Fluidkammern ist, umso mehr Fluidvolumen müsste innerhalb kürzester Zeit reguliert werden, welches die Reaktionszeit des erfindungsgemäßen Fahrzeugsitzes für den automatischen Neigungsausgleich reduzieren würde.

Zudem kann die Erstreckung der Fluidkammern in Querrichtung zu der Sitzrichtung, also in Breitenrichtung, begrenzt werden auf die Breite eines ebenen mittleren Bereiches des Sitzteilpolsters, vorzugsweise bis zu den Übergängen zu den Seitenwangenbereichen. Dieser mittlere ebene Bereich ist durch das Körpergewicht des Sitzbenutzers der Hauptbereich, der von den Beckenknochen beansprucht wird, sodass es ausreichen würde, in diesem Bereich Fluidkammern anzuordnen.

Die Steuereinrichtung ist mit der Ventileinrichtung elektrisch verbunden, wobei die Ventileinrichtung die Fluidkammern in Antwort auf ein Signal von der Steuereinrichtung entweder der ersten Hälfte linksseitig oder der zweiten Hälfte rechtsseitig mit Fluid, vorzugsweise mit Luft, durch eine Offenstellung eines Ventils befüllt. Hierdurch kann auf schnelle Weise eine gegengerichtete Ausgleichsstellung und Ausrichtung der Sitzfläche, auf der der Sitzbenutzer mit seinem Gesäßbereich sitzt, zu einer extern bedingten Neigungsstellung des Fahrzeuges erhalten werden.

Um die Form von aufgeblasenen Fluidkammern den Sitzbenutzer nicht unangenehm spüren zu lassen, ist bevorzugt oberseitig mindestens eine Filzschicht und unterseitig zu den Fluidkammern ebenso mindestens eine Filzschicht angeordnet, die sich über den gesamten Flächenbereich, in dem sich die Fluidkammern befinden, erstreckt. Dies würde beispielsweise der gesamte mittlere ebene Bereich des Sitzteiles sein. Hierdurch wird erreicht, dass diese Filzschicht eine Glättung von Höhenunterschieden, die beim Übergang von einem Fluidkammerbereich zu einem Bereich, in dem keine Fluidkammer angeordnet ist, erhalten wird.

Alternativ oder zusätzlich zu diesen Filzschichten können auch Kunststoffschichten verwendet werden.

Die unterseitige Kunststoffschicht bzw. Filzschicht dient in erster Linie dazu, eine gute Lagerung der Fluidkammern in dem eigentlichen Schaumbereich des Sitzpolsterteiles zu erhalten.

Es muss betont werden, dass der gesamte Aufbau aus ober- und unterseitiger Filzschichten, den Fluidkammern und einem oberseitigen Bezugsstoff ausschließlich im oberen Bereich des Polsterschaumteiles bzw. Sitzpolsterteiles angeordnet ist. Dies hat zur Folge, dass unterhalb dieses vielschichtigen Aufbaus noch ein großer Teil an Schaummaterial des Sitzpolsterteiles vorhanden ist, bevor das eigentliche Sitzpolsterteil, von oben nach unten betrachtet, endet und anschließend ein Unterbau des Fahrzeugsitzes beginnt.

Auf der oberseitigen Filzschicht ist zusätzlich eine Bezugsmaterialschicht bevorzugt angeordnet, um eine entsprechende Schonung des Sitzteiles und eine optische Ausgestaltung des Sitzteiles zu erhalten.

Die Steuereinrichtung weist eine Zeiteinheit auf, mittels welcher eine selbsttätige Nachregulierung der Ausgleichsstellung des Sitzteiles zeitlich begrenzt werden kann. Auf diese Weise kann beispielsweise erreicht werden, dass der aktive Neigungsausgleich nicht zu oft innerhalb einer vorgebbaren Zeitspanne angewendet wird und/oder nach einer Zeitspanne beendet wird, um dem Sitznutzer nicht durch zu häufiges Nachregulieren zu irritieren.

Eine derartige Limitierung des aktiven Neigungsausgleichs auf den Bereich der Ackerbearbeitung oder der Baustellenarbeiten kann auch dadurch erreicht werden, dass die Steuereinrichtung erst bei vorbestimmbaren Geschwindigkeitswerten und/oder Beschleunigungswerten des Fahrzeuges aktivierbar ist. Denn beispielsweise kann mittels einer Beschleunigungssensoreinheit ausgewertet werden, ob sich das Fahrzeug momentan bei einer Straßenfahrt auf einer geteerten Straße oder im Feldeinsatz, also auf Ackerboden, befindet. Bekanntlich sind im Feldeinsatz niedrigere Beschleunigungen des Fahrzeuges gegeben. Somit kann die Steuereinrichtung mittels einer CPU derart eingestellt sein, dass lediglich bei geringen Beschleunigungswerten, die von der Beschleunigungssensoreinheit gemessen werden, ein Neigungsausgleich stattfindet.

Aber auch bei Messung von Geschwindigkeitswerten mittels einer Geschwindigkeitssensoreinheit kann die Steuereinrichtung mittels der CPU nach Erhalt der Geschwindigkeitssensoreinheitswerte auswerten, ob sich das Fahrzeug derzeit mit niedriger Geschwindigkeit im Feldeinsatz oder auf Baustelleneinsatz befindet, oder auf einer normalen Straßenfahrt. Auch hierdurch kann dann eine Aktivierung des Neigungsausgleichs oder dessen Abschaltung durchgeführt werden.

Weitere vorteilhafte Ausführungsform ergeben sich aus der Zeichnung. Hierbei zeigen:
Fig. 1 in einer perspektivischen Rückansicht als Explosionsdarstellung ein Fahrzeugsitz gemäß der vorliegenden Erfindung;
Fig. 2 in perspektivischer Vorderansicht Teile eines Sitzteiles für den erfindungsgemäßen Neigungsausgleich gemäß einer Ausführungsform der Erfindung;
Fig. 3 in einer Draufsicht Teile des Sitzteiles für den erfindungsgemäßen Neigungsausgleich gemäß einer Ausführungsform der Erfindung;
Fig. 4 in einer Querschnittsdarstellung entlang A----A nach Figur 3 das Sitztteil mit erfindungsgemäßem Neigungsausgleich;
Fig. 5 in einer Ausschnittsdarstellung einen rechten Bereich der in Fig. 4 gezeigten Querschnittsdarstellung;
Fig. 6 in einer perspektivischen Darstellung Fluidkammern für einen Fahrzeugsitz gemäß einer Ausführungsform der Erfindung;
Fig. 7 die in Figur 6 dargestellten Fluidkammern mit einer teilweisen Überdeckung; und
Fig. 8 in einer perspektivischen Darstellung Fluidkammern mit daran angeschlossenen Einrichtungen gemäß einer Ausführungsform der Erfindung.

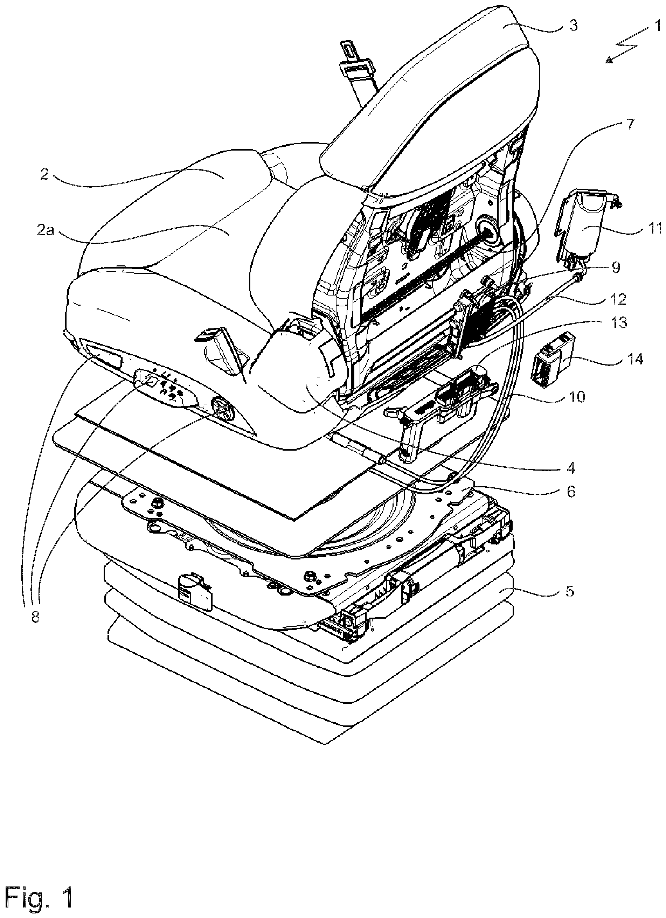

In Figur 1 ist in einer perspektivischen Rückansicht und in Explosionsdarstellung ein Fahrzeugsitz 1 für einen Neigungsausgleich des Sitzteiles gemäß der vorliegenden Erfindung dargestellt. Der Fahrzeugsitz 1 weist ein Sitzteil 2 mit einem Sitzteilpolster 2a auf.

Zudem ist eine Rückenlehne 3 angeordnet. Angedeutete Armlehnenbereiche 4 sind mit einer Drehachse 7 im Rückenbereich verbunden, um diese verschwenkbar auszurichten.

Ein Faltenbalg 5 umgibt den Unterbau des Fahrzeugsitzes, der in der Regel ein Scherengestell aufweist.

Ein Drehteller 6 ist zwischen dem Sitztteil und dem Scherengestell angeordnet, um das Sitzteil zusammen mit der Rückenlehne in horizontaler Richtung zu verdrehen.

Am Sitzteil seitlich angeordnet sind mehrere Betätigungselemente 8, die für die Einstellung der Höhe, des Federungsgrades und dergleichen verwendet werden können. Zudem können diese Schalter dazu verwendet werden, die Funktion des erfindungsgemäßen Neigungsausgleichs innerhalb des Sitzteiles, wie später beschrieben, anzustellen oder abzustellen.

Eine Ventileinrichtung 9 im rückwärtigen Bereich ist über Fluidleitungen, in der Regel Luftleitungen 10, mit hier nicht näher dargestellten Fluidkammern bzw. Luftkammer unterhalb des Sitzteiles 2 verbunden, um diese Luftkammern gezielt aufzublasen oder zu entleeren.

Eine Fluid- oder Luftpumpeneinrichtung 11 dient dazu, die Ventileinrichtungen mittels der Leitung 12 mit Luft zu versorgen.

Eine Steuereinrichtung 13 mit einer CPU ist dafür vorgesehen, sowohl die Ventileinrichtungen zu steuern als auch Messsignale von einer Neigungssensoreinheit 14 zu erhalten, die die Aufgabe hat die momentane Neigung des Fahrzeuges und damit auch des Fahrzeugsitzes festzustellen und anschließend Neigungsmessdaten an die Steuereinrichtung zu senden.

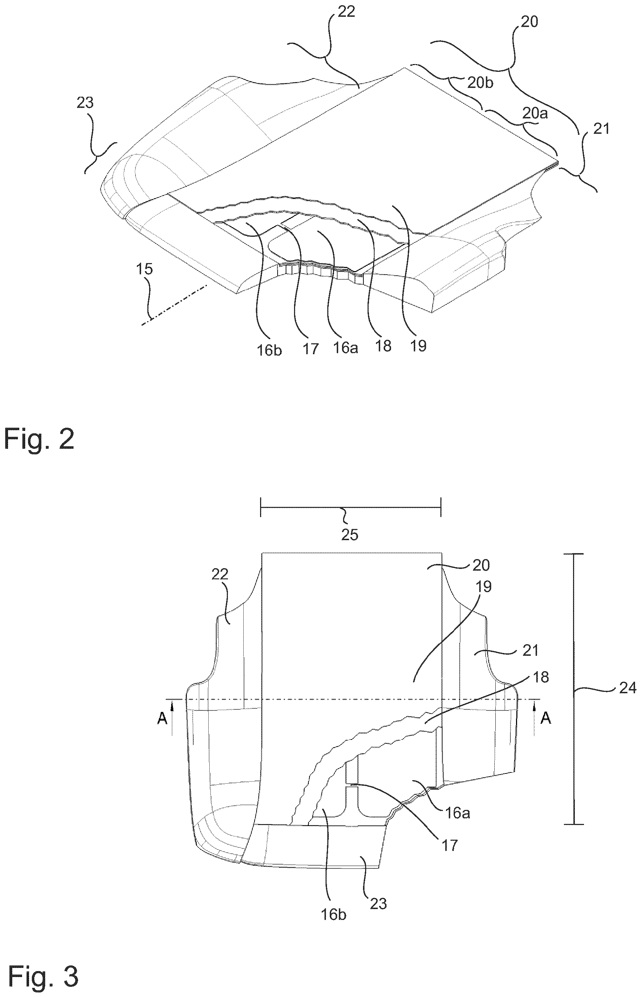

In Figur 2 ist in einer perspektivischen Teilansicht ein Sitzteil gemäß einer bevorzugten Ausführungsform der Erfindung gezeigt. Das Sitzteil weist eine linksseitige und rechtsseitige Hälfte auf. Diese links- und rechtsseitige Hälfte wird durch eine fiktive Mittelachse 15, die in Sitzrichtung verläuft, getrennt.

Fluidkammern bzw. Luftkammern 16 a und 16 b sind nebeneinander angeordnet, wobei eine Luftkammer 16a in der linksseitigen Hälfte und eine Luftkammer 16b in der rechtsseitigen Hälfte, bezogen auf die Mittelachse 15, liegt.

Beide Luftkammer 16a und 16b können zwar über Verbindungsleitungen 17 miteinander verbunden sein, müssen jedoch nicht zwingend verbunden sein.

Das Sitzpolsterteil weist einen mittleren ebenen Abschnitt 20 auf, wobei die linke Hälfte mit 20a und die rechte Hälfte mit 20b bezeichnet ist. Dieser mittlere Bereich 20 grenzt links- und rechtsseitig an Wangenbereiche 21 und 22 an, die sich im Gegensatz zu dem ebenen Mittelbereich 20 in die Höhe erheben, um eine seitliche Stütze des Sitzbenutzers im Gesäßbereich zu erhalten.

Ein vorderer Beinbereich 23 des Sitzteiles ist in der Regel nicht mit Fluidkammern bzw. Luftkammern ausgestattet, da dieser Bereich hinsichtlich der Beckenstellung weniger relevant ist.

Die nebeneinander angeordneten Luftkammern werden von einer oberseitigen Filzschicht 18, wie sie teilweise dargestellt ist, abgedeckt, um einen flächenmäßigen Abgleich in Höhenrichtung von einer zu der anderen Luftkammer zu erhalten. Zudem ist diese Filzschicht im ebenen mittleren Bereich mit einem Bezugsmaterial bzw. einem Bezugsstoff 19 abgedeckt.

In Fig. 3 ist ein Teil eines Sitzteils des erfindungsgemäßen Fahrzeugsitzes in aufgeschnittene Form und in Draufsicht wiedergegeben. Dieser Darstellung ist zu entnehmen, dass der mittlere Bereich eine Breite 25 aufweist, die durch den Beginn der Seitenwangenbereiche 22 und 21 begrenzt ist. Zudem ist der mittlere Bereich mit einer Länge 24 gekennzeichnet, um zu verdeutlichen, dass innerhalb dieses Längsabstandes 24 und des Breitenabstandes 25 die Luftkammern 16a, 16b angeordnet sind.

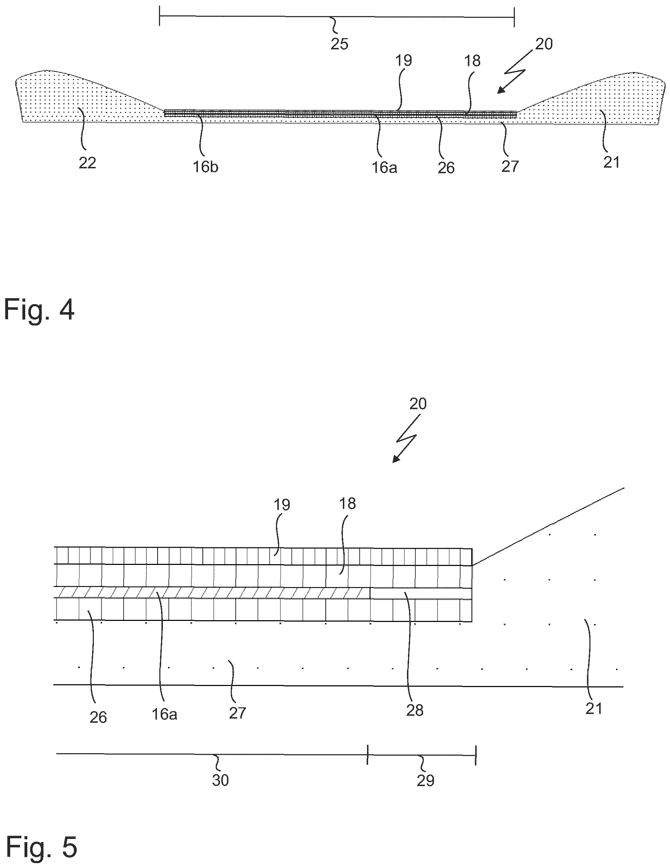

Entlang eines Schnittes A-------A, wie in Figur 3 gezeigt, wird die dazugehörige Querschnittsdarstellung in Figur 4 wiedergegeben. Zudem wird in Figur 5, in die Bildebene hineinbetrachtet, ein rechtsseitiger vergrößerter Ausschnitt der Darstellung gemäß Fig. 4 wiedergegeben.

Unter Bezugnahme auf die Darstellungen gemäß Figur 4 und 5 soll ein Schichtaufbau im oberen Sitzbereich des mittleren ebenen Bereiches 20 gemäß der vorliegenden Erfindung erklärt werden. Diesen Darstellungen ist deutlich zu entnehmen, dass ober- und unterhalb der Luftkammern 16a und 16b jeweils eine Filzschicht 18 und 26 angeordnet sind, wobei die oberseitige Filzschicht 18 zudem noch mit dem Bezugsmaterialstoff 19 abgedeckt wird.

Die unterseitige Filzschicht 26 erstreckt sich ebenso über die gesamte Breite des mittleren Bereiches 20 des Sitzteiles bzw. des Sitzpolsterteiles. Unterhalb dieser Filzschicht 26 ist noch ein großer Teil an Schaummaterial 27 des Polsterschaumteiles 2a zu finden. Dies soll verdeutlichen, dass der Schichtaufbau aus den Schichten 16a, 16b, 18,19 und 26 lediglich im obersten Bereich des Sitzteiles angeordnet ist.

Auf der Ebene der Luftkammern 16a und 16b können seitlich mit einer Breitenausdehnung 29 luftkammerfreie Bereiche 28 in äußeren Bereichen vorhanden sein. Somit weisen die Luftkammern 16a und 16b in Breitenrichtung eine Ausdehnung 30 auf, die geringer als die gesamte Breite 25 des ebenen mittleren Bereiches ist.

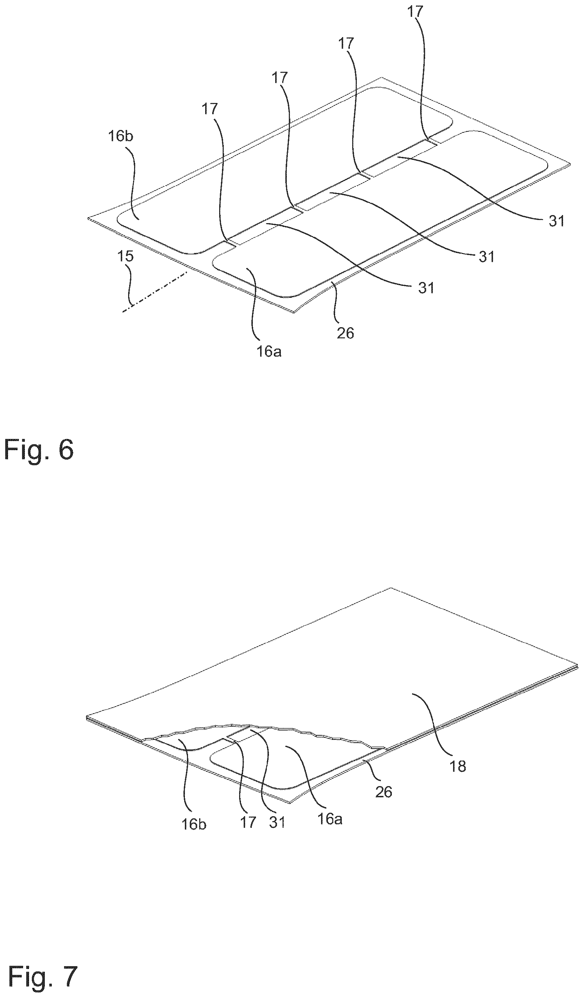

In Figur 6 ist in einer perspektivischen Darstellung ein Abschnitt des Sitzteiles mit zwei Luftkammern 16a und 16b wiedergegeben. Dieser Darstellung ist nochmals deutlich zu entnehmen, dass die eine Hälfte an Luftkammern bzw. eine Luftkammer 16a auf der einen Seite der Mittelachse 15 und die andere 16b auf der anderen Seite der Mittelachse angeordnet ist.

Mittels mehrerer Verbindungen 17 können beide Luftkammer miteinander verbunden sein. Allein schon hierdurch kann aufgrund einer Körpergewichtsverlagerung ein Neigungsausgleich geschaffen und damit eine Ausgleichsstellung des Sitzteiles und der Sitzfläche erhalten werden. Allerdings reicht eine derartige Körperverlagerung allein in der Regel nicht aus. Mittlere Stege 31 dienen dazu, beide Fluidkammern voneinander zu beabstanden und in ihrer Position zu stabilisieren.

Figur 7 zeigt die in Figur 6 wiedergegebene Darstellung der Luftkammer, jedoch mit einer Filzschicht 18, welche stellenweise überdeckt. Dies schafft einen gleichmäßigen Ausgleich in Höhenrichtung für den Sitzbenutzer, der sich auf der Sitzfläche befindet.

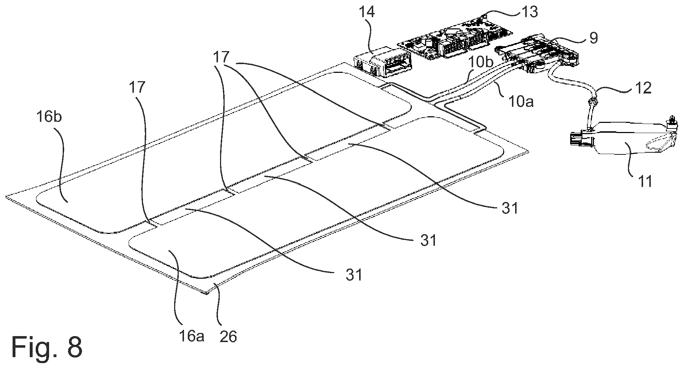

In Fig. 8 ist in einer perspektivischen Darstellung die links- und rechtsseitige Luftkammer 16a und 16 b wiedergegeben, wobei dieser Darstellung zu entnehmen ist, dass die Luftkammern getrennt durch eine Ventileinrichtung 9 mit Luft über die Leitungen 10a und 10b versorgt oder auch entleert werden können. Hierbei können die Zwischenverbindungen 17 zwischen den Luftkammern entweder weiterhin bestehen oder auch gesperrt sein oder aber auch erst gar nicht vorhanden sein. Auf diese Weise ist eine verbesserte getrennte Ansteuerung der Luftkammern möglich.

Ebenso dargestellt ist die Neigungssensoreinheit 14 sowie die Steuereinrichtung 13 und die Pumpeinrichtung 11, welche mittels der Leitung 12 mit der Ventileinrichtung 9 verbunden ist. Vorhandene Verbindungen zwischen der Steuereinrichtung und der Ventileinrichtung sowie der Neigungssensoreinheit sind nicht wiedergegeben.

### Bezugszeichenliste

- 1: Fahrzeugsitz
- 2: Sitzteil
- 2a: Sitzpolsterteil
- 3: erste Drehachse
- 4: Armlehnenbereiche
- 5: Faltenbalg
- 6: Drehteller
- 7: Drehachse
- 8: Betätigungselemente
- 9: Ventileinrichtung
- 10: Luftleitungen
- 11: Fluid- oder Luftpumpeneinrichtung
- 12: Leitung
- 13: Steuereinrichtung
- 14: Neigungssensoreinheit
- 15: Mittelachse
- 16: Fluidkammereinheit
- 16a: Fluidkammereinheit
- 16b: Fluidkammereinheit
- 17: Verbindungsleitungen
- 18: Filzschicht
- 19: Bezugsmaterialschicht
- 20: ebener mittlerer Bereich
- 20a: erste Hälfte
- 20b: zweite Hälfte
- 21: Wangenbereich
- 22: Wangenbereich
- 23: vorderer Beinbereich
- 24: Länge
- 25: Breite
- 26: Filzschicht
- 27: Schaummaterial
- 28: luftkammerfreie Bereiche
- 29: Breitenausdehnung
- 30: Ausdehnung
- 31: Mittlere Stege

## Patentansprüche

1. Fahrzeugsitz (1) für den automatischen Neigungsausgleich mit einem Sitzteil (2), welches ein Sitzpolsterteil (2a) aufweist,
**dadurch gekennzeichnet, dass**
eine Fluidkammereinheit (16a, 16b) mit mindestens zwei flexibel ausgebildeten Fluidkammern (16a, 16b) in dem Sitzpolsterteil (2a) in seinem oberseitigen Sitzbereich angeordnet ist, wobei, bezogen auf eine sich in Sitzrichtung erstreckende Mittelachse (15), eine erste Hälfte der Fluidkammern (16a) linksseitig und eine zweite Hälfte der Fluidkammern (16b) rechtsseitig der Mittelachse (15) angeordnet sind, wobei die Fluidkammern (16a, 16b) der ersten und der zweiten Hälften (20a, 20b) abhängig von einer festgestellten seitlichen Neigungsstellung des Sitzteils (2) mittels einer Steuereinrichtung (13) derart befüllbar oder entleerbar sind, dass ein Sitzbenutzer automatisch eine Ausgleichsstellung zu der Neigungsstellung im Gesäßbereich erfährt.

2. Fahrzeugsitz nach Anspruch 1,
**gekennzeichnet durch**
eine mit dem Fahrzeugsitz (1) verbundene Neigungssensoreinheit (14), welche den Grad der momentanen seitlichen Neigung des Fahrzeugsitzes (1) und/oder des Fahrzeuges misst und ein Neigungsmesssignal an die Steuereinrichtung (13) sendet.

3. Fahrzeugsitz nach Anspruch 1 oder 2,
**dadurch gekennzeichnet, dass**
die Fluidkammern (16a, 16b) Luftkammern sind.

4. Fahrzeugbesitzer Anspruch 3,
**dadurch gekennzeichnet, dass**
links- und rechtsseitig der Mittelachse (15) eine Mehrzahl an Luftkammern angeordnet ist.

5. Fahrzeugsitz nach einem der vorangegangenen Ansprüche,
**dadurch gekennzeichnet, dass**
sich die Fluidkammern (16a, 16b) in Sitzrichtung begrenzt auf die Länge (24) eines Beckens eines Gesäßbereiches des Sitzbenutzers erstrecken.

6. Fahrzeugsitz nach einem der vorangegangenen Ansprüche,
**dadurch gekennzeichnet, dass**
sich die Fluidkammern (16a, 16b) quer zur Sitzrichtung begrenzt auf die Breite (25) eines ebenen mittleren Bereichs (20) des Sitzteilposters (2a) bis zu den Übergängen in Seitenwangenbereiche (21, 22) erstrecken.

7. Fahrzeugsitz nach einem der vorangegangenen Ansprüche,
**dadurch gekennzeichnet, dass**
die Steuereinrichtung (13) mit einer Ventileinrichtung (9) verbunden ist, welche die Fluidkammern (16a, 16b) in Antwort auf ein Signal von der Steuereinrichtung (13) entweder der ersten Hälfte (20a) linksseitig oder der zweiten Hälfte (20b) rechtsseitig mit Fluid, vorzugsweise mit Luft, durch eine Offenstellung eines Ventils befüllt.

8. Fahrzeugsitz nach einen der vorangegangenen Ansprüche,
**dadurch gekennzeichnet, dass**
die Fluidkammern (16a, 16b) oberseitig und unterseitig mit jeweils mindestens einer Filzschicht (18, 26) und/oder einer Kunststoffschicht (18, 26) bedeckt sind.

9. Fahrzeugsitz nach Anspruch 8,
**dadurch gekennzeichnet, dass**
die oberseitige Filzschicht (18) mit einer Bezugsmaterialschicht (19) überdeckt ist, auf welcher der Sitzbenutzer sitzt.

10. Fahrzeugsitz nach einem der vorangegangenen Ansprüche,
**dadurch gekennzeichnet, dass**
die Steuereinrichtung (13) eine Zeiteinheit beinhaltet, mittels welcher eine zeitliche Begrenzung der Ausgleichsstellung des Sitzteils (2) einstellbar ist.

11. Fahrzeugsitz nach einem der vorangegangenen Ansprüche,
**dadurch gekennzeichnet, dass**
die Steuereinrichtung (13) bei vorbestimmbaren Geschwindigkeitswerten und/oder Beschleunigungswerten des Fahrzeuges aktivierbar ist.
